(19) Europäisches Patentamt
European Patent Office
Office européen des brevets

(11) Publication number : **0 522 753 A2**

(12) # EUROPEAN PATENT APPLICATION

(21) Application number : **92305887.9**

(22) Date of filing : **25.06.92**

(51) Int. Cl.$^5$ : **C08G 77/448**, C08L 83/10, C08L 69/00

(30) Priority : **01.07.91 US 724020**

(43) Date of publication of application : **13.01.93 Bulletin 93/02**

(84) Designated Contracting States : **DE FR GB IT NL**

(71) Applicant : **GENERAL ELECTRIC COMPANY**
**1 River Road**
**Schenectady, NY 12345 (US)**

(72) Inventor : **Davis, Charles Gary**
**5 Felicia Court**
**Albany, New York 12205 (US)**

(74) Representative : **Pratt, Richard Wilson**
**London Patent Operation G.E. Technical Services Co. Inc. Essex House 12/13 Essex Street**
**London WC2R 3AA (GB)**

(54) **Flame retardant aromatic polycarbonates and aromatic polycarbonate blends.**

(57) Polycarbonates in the form of aromatic polycarbonate-polydiorganosiloxane block copolymers and blends of aromatic polycarbonate and aromatic polycarbonate-polydiorganosiloxane block copolymer having from about 0.1% to 0.9% by weight of chemically combined polydiorganosiloxane exhibit significantly lower smoke and heat release when burned. In addition to showing improved ASTM E906-83 performance, the polycarbonates also have been found to retain high impact and thermal properties.

EP 0 522 753 A2

## Reference to Related Application

Reference is made to copending application RD-20,422 which is filed concurrently herewith and incorporated herein by reference.

## Background of the Invention

The present invention relates to flame retardant aromatic polycarbonates having about 0.9% by weight or less of chemically combined polydiorganosiloxy units and flame retardant blends of organopolysiloxane-polycarbonate block copolymers and aromatic polycarbonates. More particularly, the present invention relates to aromatic polycarbonates and aromatic polycarbonate blends having from about 0.1 to 0.9% by weight of chemically combined poly(diorganosiloxy) units.

Prior to the present invention, as shown by Vaughn, U.S. patent 3,189,662, organopolysiloxane-polycarbonate block copolymers were prepared by phosgenating a mixture of a dihydric phenol, such as bisphenol A and a phenol terminated polydiorganosiloxane. The polydiorganosiloxane was present in about 10 to 75% by weight of the block copolymers. Additional organopolysiloxane-polycarbonate block copolymers are shown by Vaughn, U.S. patents 3,419,634 and 3,419,635 which are incorporated herein by reference.

Although silicone-polycarbonate block copolymers have been found to be flame retardant and useful as dielectric films and membranes as shown by Rich et al, U.S. patent 4,945,148, experience has shown that the incorporation of polydiorganosiloxane blocks into polycarbonate blocks often reduces the Notched Izod impact value of the polycarbonate and interferes with its utility in many applications. It would be desirable therefore to incorporate polydiorganosiloxane units into polycarbonates to enhance the flame retardant properties of the polycarbonates without substantially reducing its impact strength and its use in glazing applications.

## Summary of the Invention

The present invention is based on the discovery that aromatic polycarbonates having from about 0.1% to about 0.9% by weight of chemically combined diorganosiloxy units of the formula,

$$-(R^1)_2SiO- \qquad (1)$$

selected from,

(A) aromatic polycarbonate-polydiorganosiloxane block copolymers consisting essentially of chemically combined polydiorganosiloxy units of formula (1) and aromatic carbonate units of the formula,

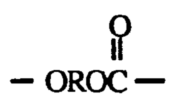

(2)

, and

(B) blends of an aromatic polycarbonate consisting essentially of chemically combined units of formula (2) and an aromatic polycarbonate-polydiorganosiloxane block copolymer consisting essentially of from about 0.2% to about 80% by weight of polydiorganosiloxane units of formula (1) chemically combined with from about 20% to about 99.8% by weight of aromatic carbonate units of formula (2), show significantly lower smoke and heat release than aromatic polycarbonate free of such chemically combined diorganosiloxane while possessing substantially the same impact properties as silicone free aromatic polycarbonate, where R is a $C_{(6-25)}$ aromatic organic radical and $R^1$ is a $C_{(1-13)}$ monovalent hydrocarbon radical or a $C_{(1-13)}$ monovalent hydrocarbon radical substituted with one or more radicals inert during condensation or phosgenation.

## Statement of the Invention

There is provided by the present invention, a flame retardant polycarbonate comprising by weight, from about 0.1% to about 0.9% of recurring chemically combined diorganosiloxy units of formula (1) and about 99.1% to 99.9% by weight of recurring chemically combined aromatic carbonate units of formula (2), which flame retardant polycarbonate is a member selected from the class consisting of

(C) an aromatic polycarbonate-polydiorganosiloxane block copolymer having from about 0.1% to about 0.9% by weight of chemically combined polydiorganosiloxane units of formula (1) and about 99.1% to

99.9% by weight of recurring chemically combined aromatic carbonate units of formula (2), and

(D) a blend of an aromatic polycarbonate consisting essentially of chemically combined units of formula (2), and an aromatic polycarbonate-polydiorganosiloxane block copolymer having from about 0.2% to about 80% by weight of chemically combined diorganosiloxy units of formula (1) chemically combined with from about 20% to 99.8% by weight of aromatic carbonate units of formula (2).

As used hereinafter the term Heat Release Rate "HRR" (KW/M2) and Total Heat Release "HTOT" (KW-min/M2) is defined in accordance with the Ohio State University (OSU) smoke and heat test (ASTM-E906-83) as follows:

Polymer plaques (6″ x 6″ x 1/16″) are mounted in the horizontal mode of the test chamber. The environmental test chamber contains a constant flow of air throughout the test. Combustion is initiated by a non-piloted ignition, piloted ignition of evolved gases, or point ignition of the surface. If ignited by piloted ignition, the end of the burner tubing is 10 mm above the perpendicular to the exposed horizontal surface of the specimen. The changes in optical density of the gas leaving the chamber are monitored and from this data, smoke release rates are determined. The results for total smoke evolved and smoke release rates are reported in smoke/squared meter of sample and smoke/min/squared meter respectively. The "SMOKE" unit is defined by the concentration of smoke particulates in a cubic meter of air that reduces the present transmission of light through a 1 meter path to 10% as measured by a calibrated photometer. An illustration of the Smoke Release Rate (SRR) calculations are as follows:

Calculations: SMOKE Release Rate = $D/kLA(V_o/t)$

where:

k absorption coefficient = 1.0 squared meter/smoke

D optical density (absorbance) = log (100%T)

L light path = 0.134 m (stack width)

A exposed surface area of specimen, squared meter

$V_o/t$ flow rate of air leaving apparatus cubic meter/min= $V_i/t \times T_o/T_i$

$V_i/t$ flow rate of air entering apparatus, cubic meter/min

$T_i, T_o$ absolute temperature of air in and out of apparatus respectively.

Among the aromatic polycarbonates which can be used in the practice of the present invention are aromatic polycarbonates formed by phosgenating one or more of the following bisphenols: p,p′-bisphenol A, m,p-bisphenol A, o,p-bisphenol A, spirobiindane bisphenol, tetramethylbisphenol A and tetramethylbiphenol. Copolycarbonates containing the aforementioned bisphenols as major bisphenol constitutents are also included. Preferably, the polycarbonate is a bisphenol A polycarbonate having an intrinsic viscosity (IV) of from 0.35 to 1.8 dl/g in chloroform at 25°C.

Additional polycarbonates and methods for making which are incorporated herein by reference, can be found in Schnell, et al, U.S. Pat. No. 3,028,365; Idel et al U.S. Patn.No. 4,185,009; Evans, et al, U.S. Pat. No. 4,605,731; Evans, et al, U.S. Pat.No. 4,701,519; and Brunelle et al, U.S. Pat No. 4,727,134. In addition Kirk-Othmer, 3rd Edition,Vol. 18, pages 479-494, shows additional procedures.

Silicone-polycarbonate block copolymers which can be used in the practice of the present invention can be made by the method of Evans et al, U.S. Pat.No. 4,920,183 assigned to the same assignee as the present invention and incorporated herein by reference. In the method of Evans et al, a hydroxyl terminated polycarbonate oligomer is condensed with a halo terminated polydiorganosiloxane in the presence of an acid acceptor. An additional procedure for making silicone-polycarbonate block copolymers is shown by the aforementioned Vaughn patent involving the phosgenation of a mixture of a dihydric phenol, such as bisphenol A and a phenol terminated polydiorganosiloxane, such as a bisphenol A terminated polydimethylsiloxane. In addition, phenol terminated polydiorganosiloxane having terminal phenol groups joined to silicon through divalent organo radicals by carbon silicon linkages, such as polymers having terminal eugenol groups, or other aliphatically unsaturated phenol groups, as shown by Vaughn, U.S. patent 3,419,634, can be used.

Although the polydiorganosiloxane blocks are preferably polydimethylsiloxane, polydiorganosiloxane consisting of a mixture of condensed dimethylsiloxy units, and a member selected from diphenylsiloxy, methylphenylsiloxy, methylvinylsiloxy, and a mixture thereof, also can be used.

Suitable dihydric phenols which can be used in the practice of the present invention to make the polycarbonates and silicone-polycarbonate block copolymers are, for example, 2,2-bis(2,-hydroxyphenyl)propane, 2,4′-dihydroxybiphenylmethane, bis-(2-hydroxyphenyl)methane, 2,2-bis-(4-hydroxyphenyl)propane, referred to hereinafter as "bisphenol A" or "BPA", 1,1-bis(4-hydroxyphenyl)ethane, 1,1-bis(4-hydroxyphenyl)propane, 4,4′-dihydroxybiphenyl, 4,4′-dihydroxy-3,3′,5,5′-tetramethylbiphenyl, 2,4-dihydroxybenzophenone, 4,4′-dihydroxydiphenylsulfone, 2,4′-dihydroxydiphenylsulfone, 4,4′-dihydroxydiphenylsulfoxide, 4,4′-dihydroxydiphenylsulfide, 1,1-dichloro-2,2-bis(4-hydroxyphenyl)ethylene, 6,6′-dihydroxy-3,3,3′,3′-tetramethyl-bis-1,1′-spirobiindane,

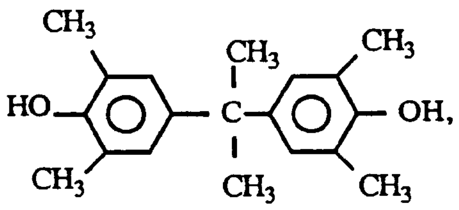

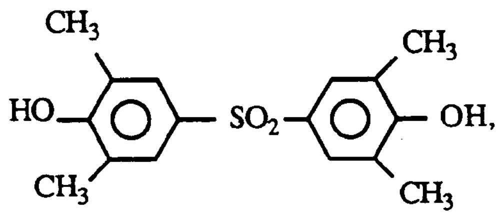

and

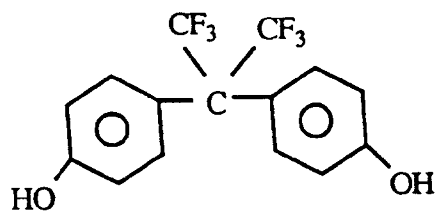

In order that those skilled in the art will be better able to practice the present invention the following examples are given by way of illustration and not by way of limitation. All parts are by weight.

Example 1

In accordance with the procedure of Vaughn, U.S. patent 3,419,634, a silicone polycarbonate copolymer was prepared by interfacially phosgenating a mixture of 2000g of bisphenol A, 14.8g of a eugenol end-capped dimethylsiloxane having an average of 12 dimethylsiloxy units, 65.2g of p-cumylphenol chainstopper and 25mL of triethylamine in 11L of methylene chloride and 7L of water. 1180g of phosgene was added over a 0.5 hour period. The phases were separated and the polymer solution diluted with 9L of methylene chloride. It was washed twice with 10L of 0.3N aqueous HCl followed by 4 times with 10L of water. The polymer solution was precipitated into 40L of methanol in a Henschel mixer. The polymer was dried at 120°C. The polymer had a Tg of 150°C with a Mw - 52500 and Mn = 18900. The polymer contained 0.47 weight % siloxane. The powder was extruded and the resulting pellets were compression molded into 6″ x 6″ x 1/16″ OSU plaques.

Following the above procedure, a series of copolymers were prepared having from about 0.1 to about 0.9% by weight of polydimethylsiloxane chemically combined with about 99.1% to 99.9% by weight polycarbonate. OSU plaques (6″ x 6″ x 1/16″) of commercially available Lexan polycarbonate of the GE Plastics Division and the aforementioned copolymers were then evaluated for Heat Release Rate, (HRR) and Smoke Release Rate, (SRR) as shown in the following table:

| wt % Siloxane | Peak HRR(KW/M²) | Peak SRR(Smk/Min, M²) |
|---|---|---|
| 0 (control) | 223.6 | 477.8 |
| 0.10 | 179.7 | 376.3 |
| 0.22 | 153.6 | 295.0 |
| 0.47 | 130.3 | 216.8 |
| 0.90 | 136.2 | 242.1 |

The above results demonstrate that the polycarbonate with chemically combined diorganosiloxane possess superior flame retardant properties as compared to the polycarbonate free of chemically combined diorganosiloxane.

Example 2

In accordance with the procedures of Vaughn, U.S. patents 3,189,662 and 3,419,634, several silicone polycarbonate block copolymers were prepared having weight % siloxane in the range of from 5 to 45 wt % and a silicone block length of from 10 to 100 dimethylsiloxy units. The resulting polymers were blended with Lexan polycarbonate, a product of GE Plastics Division, to provide blends having polydimethylsiloxane in the range of 0.1% to 0.9% by weight. The blends along with commercially available Lexan polycarbonate were extruded and the pellets obtained were compression molded into 6″x6″x1/16″ OSU plaques. The plaques were evaluated for Heat Release Rate (HRR), and Smoke Release Rate (SRR) as shown below, where "d" indicates siloxane chain length and "Wt % Silox" indicates siloxane weight percent:

| d | wt % Silox | Blend wt % Silox | Peak HRR(KW/M²) | Peak SRR(Smk/Min, M²) |
|---|---|---|---|---|
| | 0 | 0 | 223.6 | 477.8 |
| 10 | 5 | 0.5 | 117.9 | 252.2 |
| 50 | 5 | 0.5 | 145.8 | 287.3 |
| 100 | 20 | 0.5 | 152.5 | 288.4 |
| 10 | 43 | 0.5 | 108.1 | 174.0 |

The above results show that polycarbonate blends having less than 1% by weight of chemically combined methylsiloxane provide superior flame retardant properties as compared to polycarbonate free of siloxane.

Example 3

Copolymers made in accordance with the method of Example 2 were then evaluated for Notched Izod by preparing 1/8″ Notched Izod samples. The following results were obtained:

| Wt. % Siloxane | Notched Izod (ft lbs/in) |
|---|---|
| 0 (control) | 15 |
| 0.2 | 16.7 |
| 0.5 | 16.6 |
| 1.0 | 17.7 |
| 2.5 | 17.2 |

The above results show that the Notched Izod values of the compositions containing from about 0.2 to about 2.5% of chemically combined polydimethylsiloxane are substantially similar to the Notched Izod values of commercially available polycarbonate. However, the thermal stability of polycarbonates made in accordance with the method of Example 1, having about 0.1% to about 0.9% of chemically combined dimethylsiloxane are found to be superior during processing over copolymers having 1% or more of chemically combined polydimethylsiloxane as shown by reduced weight loss as compared to copolymers having 1% or more of chemically combined polydimethylsiloxane.

Although the above examples are directed to only a few of the very many variables which can be used in the practice of the present invention, it should be understood that a much broader variety of silicone-polycarbonate copolymers as shown by Vaughn, U.S. Patents 3,189,662 and 3,419,634 can be used within the afore described weight % range which also can be blended with polycarbonates.

## Claims

1. A flame retardant polycarbonate comprising by weight, from about 0.1% to about 0.9% of recurring chemically combined diorganosiloxy units of the formula,

$$-(R^1)_2SiO-$$

and about 99.1% to 99.9% of recurring chemically combined aromatic carbonate units of the formula,

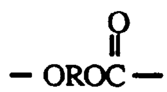 ,

which flame retardant polycarbonate is a member selected from the class consisting of
(A) an aromatic polycarbonate-polydiorganosiloxane block copolymer having from about 0.1% to about 0.9% by weight of the chemically combined polydiorganosiloxy units and 99.1% to 99.9% of recurring aromatic carbonate units, and
(B) a blend of an aromatic polycarbonate consisting essentially of the recurring aromatic carbonate units and an aromatic polycarbonate-polydiorganosiloxane block copolymer having from about 0.2% to about 80% by weight of diorganosiloxy units chemically combined with about 20% to about 99.8% by weight of the recurring aromatic carbonate units.

2. A flame retardant polycarbonate in accordance with claim 1, where the polycarbonate is a bisphenol A polycarbonate.

3. A flame retardant polycarbonate in accordance with Claim 1 or Claim 2, having from 0.1 to 0.9% by weight of chemically combined polydimethylsiloxane.

4. A flame retardant bisphenol A polycarbonate having from about 0.1% to about 0.9% by weight of chemically combined polydimethylsiloxane.

5. A flame retardant blend of bisphenol A polycarbonate and a bisphenol A-polycarbonate-polydimethylsiloxane block copolymer having from about 0.1% to about 0.9% by weight of polydimethylsiloxane.